Europäisches Patentamt

European Patent Office

Office européen des brevets

(11) Publication number: **0 096 589**
A1

(12) **EUROPEAN PATENT APPLICATION**

(21) Application number: **83303310.3**

(22) Date of filing: **08.06.83**

(51) Int. Cl.³: **F 16 B 2/08**

(30) Priority: **09.06.82 GB 8216722**

(43) Date of publication of application:
**21.12.83 Bulletin 83/51**

(84) Designated Contracting States:
**DE FR GB NL**

(71) Applicant: **Wonderclip Limited**
**Unit 5 Phoenix Industrial Estate Loxdale Street**
**Bilston West Midlands WV14 0PL(GB)**

(72) Inventor: **Huxtable, Peter John**
**Merritts**
**Great Witley Worcestershire(GB)**

(72) Inventor: **Ayliffe, Charles**
**35 Bulger Road**
**Bilston West Midlands(GB)**

(74) Representative: **Lomas, Geoffrey Michael et al,**
**BARKER, BRETTELL & DUNCAN 138 Hagley Road**
**Edgbaston**
**Birmingham B16 9PW(GB)**

(54) Clip for securing around a member such as a pipe.

(57) A clip consists of a plastics band (3) formed with screw thread portions (4) on one side, a plastics guide funnel (2), and a plastics saddle (8, 9) provided with an integral column (10) which partitions the interior of the guide funnel into two passages (25) through which the strap extends. The guide funnel and column guides the strap on assembly into position within the bore of a nut (5) seated on the guide funnel.

FIG. 1.

FIG. 2.

EP 0 096 589 A1

## CLIP FOR SECURING AROUND A MEMBER SUCH AS A PIPE

This invention relates to a clip for securing around a member, such as a pipe. The member need not be of circular cross-section.

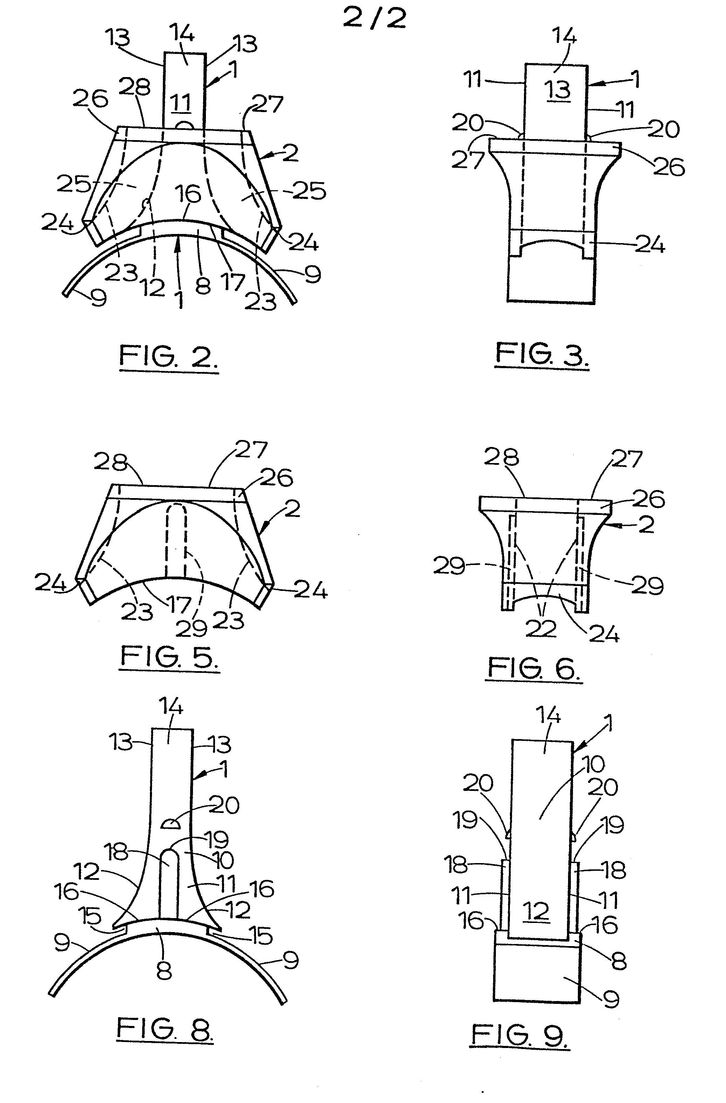

In U.K. Patent Specification No. 2 079 835 A, Figures 5 to 10, is disclosed a clip comprising a saddle body for seating on a member, and a strap for passing around the member and formed on one side thereof with external screw threads, the body being provided with two independent arcuate passages for guiding opposite end portions of the strap into the bore of a nut seated on the saddle for threadedly engaging with the nut threads. On turning the nut in the appropriate direction, the strap end portions are drawn through the arcuate passages to tighten the strap around the member. The saddle body is provided with an integral peg projecting into the bore of the nut to hold the strap ends in mesh with the nut threads.

Whilst that clip has been found to be satisfactory in use it is relatively costly to manufacture in view of the expensive moulding process required to produce two independent arcuate passages in the saddle body.

A potentially cheaper construction of clip was previously proposed in U.S. Specification No. 2 452 186. In that construction a saddle framework was provided with an upstanding, integral peg received in the bore of the nut between the strap ends, but the strap ends were passed directly into the nut bore, and no means was provided for guiding the strap ends arcuately into the bore of the nut. The bore of the nut adjacent to the saddle was belled outwards slightly to assist in bending the strap, but the reaction to the bending forces was taken entirely by the nut. This would substantially increase the friction forces resisting turning of the nut, so that tightening of the nut would almost certainly require the use of tools. We consider it highly desirable that in many applications the nut should be capable of being turned by hand without the use of tools.

Also, with the construction of U.S. 2 452 186 the strap end portions are bent through a relatively tight curve on entering the nut, and we have found such tight curves to be undesirable in that failure of a plastics strap may be produced by the high local forces exerted on the strap.

The present invention stems from attempts to devise a clip which is cheaper to manufacture than the aforementioned clip of Specification No. 2079835A but in which the friction forces resisting turning of the nut are kept within reasonable limits.

According to the invention a clip for securing around a member comprises a flexible strap for substantially encircling the member, opposite end portions of the strap being formed on one side with external screw thread portions which are adapted to mesh with complementary internal screw threads of a rotatable nut, a saddle for seating on the member, and an independently formed guide funnel adapted to be located on the saddle with the mouth of the funnel adjacent the saddle, and with its opposite end supporting the nut, the arrangement being such that with the guide funnel assembled on the saddle the strap end portions may be passed into the mouth of the funnel from opposite sides thereof and out through said opposite end for meshing with the nut.

Since the funnel has only a single through-opening it can be formed relatively cheaply, conveniently by moulding, and the saddle can be made relatively cheaply.

By the term "independently formed" we do not, of course, exclude the possibility that the saddle and the funnel may be formed at the same time in different parts of a composite mould in accordance with standard moulding procedures.

Preferably the saddle is integral with an upstanding column which is received within the funnel and is shaped to partition the funnel opening into two passages for respectively receiving the strap end portions.

The base of the column adjacent to the saddle is preferably wider than the apex of the column and the column is provided with a pair of opposed concave side surfaces for directing the strap ends towards said opposite end of the funnel when the strap ends are initially inserted into the mouth of the funnel.

The column is preferably provided on a further pair of side surfaces with guide formations engageable with complementary formations provided on or in the internal funnel walls, the formations being arranged to guide the column to an assembled position in the funnel when the column is inserted into the funnel.

A peg is preferably integral with the apex of the column and, in the assembled condition of the column, projects outwardly of said opposite end of the funnel into the bore of the nut, to hold the strap ends in mesh with the nut threads.

The funnel opening is preferably of elongate substantially rectangular transverse cross-section, and is defined by two opposed substantially flat surfaces connected by arcuate surfaces which are engaged by the respective threaded side of the band. The flat surfaces assist in preventing the band end portions from twisting.

Preferably a snap-engagement is provided between the peg or column and the funnel to retain the funnel in the assembled condition on the saddle.

A clip in accordance with the invention will now be described, by way of example only, with reference to the accompanying drawings in which:-

Figure 1 is a side elevation of the clip;

Figures 2, 3 and 4 are side, end and plan views respectively of the assembled saddle unit and guide funnel;

Figures 5, 6 and 7 are side, end, and under-plan views of the guide funnel;

Figures 8 and 9 are side and end elevations of the saddle unit.

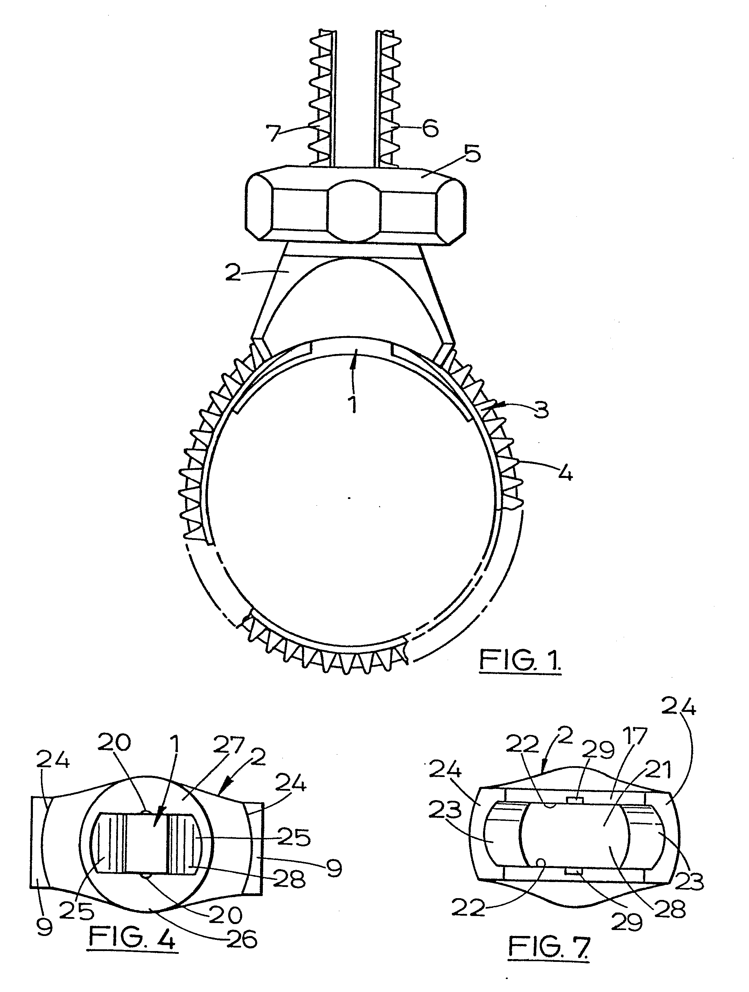

With reference to Figure 1, the clip comprises a saddle unit 1, a guide funnel 2 mounted on the saddle unit 1, a single flexible plastics strap 3 formed on one side with external screw thread portions 4, and an internally threaded finger-turnable plastics nut 5 meshed with opposite end portions 6 and 7 of the strap 3.

As shown in Figures 8 and 9, the saddle unit 1, formed as a plastics moulding, comprises a relatively stiff saddle centre 8 with oppositely extending, arcuate flexible saddle flaps 9 which reduce the friction between the band and the member around which the band is placed in the regions where the band approaches the guide funnel 2. The saddle centre 8 is integral with the base of an upstanding column 10 defined by a pair of substantially flat side surfaces 11 and by a pair of surfaces 12 which, as viewed in Figure 18, are concave but merge at their upper ends into opposed, flat surfaces 13 of a peg 14 of oblong-rectangular cross-section. The base of the column 10 as viewed in Figure 8 overhangs the saddle centre 8 at opposite sides to define opposed channels 15 which permit the roots of the flaps 9 to flex.

As viewed in Figure 9, the saddle centre 8 is wider than the column 10 so as to provide a pair of upwardly facing support surfaces 16 which are engaged in use by the basal surfaces 17 of the guide funnel 2. The basal surfaces 17 constitute supported surfaces.

Projecting outwardly from the planar side surfaces 11 are respective upright guide ribs 18 which assist in slidably guiding the column 10 into an assembled position in the guide funnel 2, the ribs 18 being provided with rounded ends 19. A respective outwardly projecting pip 20 having a flat base and rounded upper surface is provided on each side surface 11 and spaced upwardly from the rib ends 19, for the purpose of effecting a snap-engagement between the saddle unit 1 and the guide funnel 2.

With reference to Figures 5, 6 and 7, the guide funnel 2 is a plastics moulding of generally funnel configuration but in which the funnel mouth or opening 21 is transversely elongated. The funnel opening 21, as shown in Figure 7, is defined by a pair of opposed flat surfaces 22 and by a pair of surfaces 23 which are of concave transverse cross-section as viewed in Figure 7, complementary to the profile of the threaded side of the strap 3, but in another plane as shown in Figure 5 are curved convexly to guide the strap end portions 6 and 7 into the nut 5.

The basal surfaces 17 at the lower, mouth end of the guide funnel are of complementary arcuate shape to the upper surfaces 16 of the saddle centre 8 to seat thereon. As shown in Figures 2 and 7, the basal surfaces 17 terminate in corner chamfers 24 which enable the arcuate passages 25, Figure 2, defined between respective pairs of surfaces 12 and 24, to break out of the assembled guide funnel and saddle unit in a sideways direction generally tangentially of the respective flap 9 and adjacent thereto.

The upper end of the guide funnel 2, that end provided with the narrower, exit funnel opening 28 is formed as a circular platform 26 to provide a planar upper surface 27 on which sits the nut 5 in the assembled clip.

Recesses 29 of complementary shape to the ribs 18 are provided in the opposed faces 22 of the guide funnel 2 to receive the ribs 18 on assembly of the saddle unit 1 to the guide funnel 2. The spacing of the faces 22 may be made slightly less than the spacing of faces 11 so that in the assembled condition the column 10 is resiliently gripped by the guide funnel.

In order to assemble the saddle unit 1 to the guide funnel 2, the peg 14 is inserted centrally into the mouth of the funnel, and the upper ends 19 of the ribs 18 are brought into register with the lower ends of the recesses 29, this being facilitated by the rounded shape of ends 19. The saddle unit 1 is then pushed home to bring the surfaces 16 and 17 into mutual engagement. During the initial part of the movement the pips 20 are within the recesses 22 but pressure is required to ease the pips 20 past the upper ends of the recesses 22 and through the platform 26 so that they snap into their final positions shown in Figure 3 in which the flat base of each pip engages with the face 27 of the platform to lock the saddle unit 1 to funnel 2.

Since the peg 14 is of oblong-rectangular cross-section there is ample room for the pips 20 to be accommodated within the bore of nut 5.

When the strap end portions are loosely inserted into the lower ends of passages 25 they engage with the concave surfaces 12 which bend the strap ends upwardly to guide them into face contact with the respective peg side faces 13. The nut 5 is then screwed onto the end portions 6, 7 to bring the nut into engagement with the platform surface 26, so that on further tightening of the nut the strap end portions are drawn through the passages 25 to tighten the strap around the member being secured. As the band tightens, the band end portions within the guide funnel will be forced more firmly into engagement with surfaces 23, but since these surfaces, as shown in Figures 2 and 3, alter the direction of the strap progressively over a long distance, the strap is not subjected to undue bending forces.

The surfaces 22 define opposed planar side surfaces of the passages 25 to resist twisting of the band end portions.

It will be appreciated that the peg 14 holds the strap end portions meshed with the nut threads.

The surfaces 16 support the entire load exerted by the nut 5 on the platform 26 of the guide funnel and in this way the nut load is transferred to the stiff saddle centre 8 which is capable of taking the load without substantial deformation. This arrangement ensures that the portions of the guide funnel 2 adjacent to sufaces 24 do not bear the compressive load and avoids risk of the band becoming trapped where it enters the funnel mouth 21.

CLAIMS

1. A clip for securing around a member comprising a flexible strap (3) for substantially encircling the member, opposite end portions (6, 7) of the strap being formed on one side of the strap with external screw thread portions (4), a guide body through which the strap passes, and a rotatable nut (5) supported on the guide body and provided with internal screw threads which are meshed with the screw thread portions of both end portions, characterised in that the guide body comprises a saddle (8, 9) for seating on the member, and a guide funnel (2) formed independently of the saddle and having a mouth end (17) seated on the saddle and an exit end (26) remote from the saddle, the nut being seated on the exit end, first and second strap lengths of the strap extending through the guide funnel from the mouth end to the exit end and being respectively contiguous with the opposite end portions, whereby on rotation of the nut in the appropriate direction the first and second strap lengths are drawn through the guide funnel towards the exit end.

2. A clip as claimed in claim 1 and comprising a column (10) received within the guide funnel between the first and second strap lengths, the column comprising a base which is integral with the saddle, the column partitioning the interior of the guide funnel into first and second passages (25) occupied by the first and second strap lengths respectively.

3. A clip as claimed in claim 2 in which the column is provided with a pair of opposed concave side surfaces (12) which respectively form walls of the first and second passages for directing ends of the strap towards the exit end of the guide funnel when the strap ends are inserted into said respective passages at the mouth end of the guide funnel.

4. A clip as claimed in claim 3 in which the column is provided with a further pair of opposed side surfaces (11) positioned intermediate the concave side surfaces, and the further side surfaces (11) are respectively provided with guide formations (18) engageable with complementary formations (29) provided on the guide funnel, the guide formations and the complementary formations being arranged to guide the column to an assembled position in the guide funnel when the column is inserted into the mouth end of the guide funnel.

5. A clip as claimed in claim 4 in which the guide formations each comprise a rib (18) extending longitudinally of the column, and the complementary formations each comprise a recess (29) extending towards the exit end.

6. A clip as claimed in claim 5 in which each said rib is provided with a rounded free end (19) for assisting in the initial location of the ribs in the recesses.

7. A clip as claimed in any of claims 2 to 6 further comprising a peg (14) which is integral with the column and projects outwardly of the exit end of the guide funnel, the peg being received within the nut between the strap end portions, whereby the peg holds the strap end portions in mesh with the nut threads.

8. A clip as claimed in any of claims 2 to 7 in which the guide funnel, saddle and column are of plastics, and comprising means (20) providing a snap engagement between the column and the guide funnel.

9. A clip as claimed in claim 8 as appended to claim 6 in which the snap engagement means comprises a projection (20) on the column spaced from one of the rounded free ends (19) in the direction away from the saddle, the projection engaging with the exit end of the guide funnel to provide a snap engagement between the column and the guide funnel.

10. A clip as claimed in any of claims 2 to 9 in which the saddle is provided with respective support surfaces (16) adjacent to opposite sides of the column base and spaced apart in the direction normal to a plane which includes the first and second passages, the guide funnel being provided with complementary supported surfaces substantially to bear the force exerted between the guide funnel and the saddle by the nut on tightening of the nut.

FIG. 1.

FIG. 4.

FIG. 7.

FIG. 2.

FIG. 3.

FIG. 5.

FIG. 6.

FIG. 8.

FIG. 9.

## DOCUMENTS CONSIDERED TO BE RELEVANT

EP 83303310.3

| Category | Citation of document with indication, where appropriate, of relevant passages | Relevant to claim | CLASSIFICATION OF THE APPLICATION (Int. Cl. ³) |
|---|---|---|---|
| A | GB - A - 2 063 354 (C. STEPHEN BRIGHTY et al.)<br><br>* Fig. 1-3; page 2, lines 30-47 *<br><br>-- | 1,2 | F 16 B 2/08 |
| A | GB - A - 2 065 218 (NIFCO INC.)<br><br>* Fig.; page 2; page 3, column 1 *<br><br>---- | 1 | |

TECHNICAL FIELDS
SEARCHED (Int. Cl. ³)

F 16 B

The present search report has been drawn up for all claims

| Place of search | Date of completion of the search | Examiner |
|---|---|---|
| VIENNA | 22-08-1983 | HOFBAUER |